# EUROPÄISCHE PATENTSCHRIFT

(11) **EP 1 570 981 B1**
(45) Veröffentlichungstag und Bekanntmachung des Hinweises auf die Patenterteilung: **09.04.2008**
(21) Anmeldenummer: 05004605.1
(22) Anmeldetag: 03.03.2005
(51) Int. Cl.: B32B 5/18, B32B 13/02, E04H 4/00, E04F 13/18, E04C 2/288

(54) **Renovierungsverfahren, insbesondere für Wasserbecken und dazu verwendeter Renovierungsaufsatz**
Method of refurbishment, particularly for water pools, and an upper component used therein
Procédé de refourbissage en particulier pour bassins d'eau, et un élément supérieur associé

(30) Priorität: 06.03.2004 DE 102004010911
(43) Veröffentlichungstag der Anmeldung: 07.09.2005
(73) Patentinhaber: WEDI GmbH, D-48282 Emsdetten (DE)
(72) Erfinder: Wedi, Stephan, 48282 Emsdetten (DE); Menzel, Guido, 48493 Wettringen (DE)
(74) Vertreter: Hoffmeister, Helmut

(56) Entgegenhaltungen:
- EP-A- 1 072 397
- DE-A1- 19 922 259
- US-A- 4 067 164

## Beschreibung

Die Erfindung betrifft ein Verfahren für die Renovierung von überholungsbedürftigen Sitzen, Liegen, Wänden oder Böden und ein für die Ausführung des Verfahrens geeignetes Element. Verfahren und Element zur Ausführung des Verfahrens werden insbesondere bei der Renovierung von Wasserbekken angewandt.

Wände und Böden von Schwimmbecken, Badebecken, Whirlpools und dergleichen, die zumindestens dem Wasser zugewandten Außenfläche Kunststoffen, insbesondere faserverstärkten Polyestern, bestehen, werden mit der Nutzung und Instandhaltung immer unansehnlicher. Wasserzusätze, wie Chlor oder Chlorverbindungen, belasten das Material und dessen Anstriche sehr.

Aber auch Sitze und Liegen, die zumindestens teilweise an ihrer Sitz- oder Liegefläche aus Kunststoffen, insbesondere Acrylaten, bestehen, und auch Wände oder Böden aus Kunststoff in Bade- und Wellnessbereichen werden mit der Nutzung und Instandhaltung immer unansehnlicher. Speziell in Dampfbädern und Duschen sind aufgrund der hohen Luftfeuchtigkeit und der wechselnden Benetzung und Trocknung die Kunststoffflächen einer hohen Belastung ausgesetzt. Hinzu kommt die Belastung durch Körperschweiß, Kosmetika und Keime.

Um eine Gesundheitsgefährdung für den Benutzer auszuschließen, werden bei der regelmäßigen Reinigung der Einrichtungen aggressive Chemikalien eingesetzt. Der tägliche Einsatz von Wasser und chemischen Reinigungsmitteln führt vor allem in öffentlichen Bädern zu hohem Verschleiß. Die Kunststoffoberflächen bekommen Risse und Kratzer, und die ehemals glatten Oberflächen werden stumpf.

Der Benutzer bringt den schlechten optischen Eindruck in Zusammenhang mit der Sauberkeit der Einrichtung, mit der Folge, dass er sie nicht mehr einladend findet und sie nicht mehr nutzen möchte.

Betreiber und Benutzer solcher Einrichtungen besinnen sich vermehrt auf keramische Baumaterialien, wie z. B. Keramikfliesen, da diese als zeitlos und beständig gelten. Eine komplette Sanierung der Einrichtungen ist aber sehr teuer und in vielen Fällen auch nicht notwendig, da lediglich das Aussehen gelitten hat.

Es stellt sich daher die Aufgabe, eine technische Lösung zu entwickeln, die es ermöglicht, überholungsbedürftige Oberflächen von Wänden und/oder Böden an Wasserbecken kostengünstig zu erneuern und, falls gewünscht, auch mit einem keramischen Fliesenbelag zu versehen. Darüber hinaus sollen auch Sitze oder Liegen, insbesondere mit KunststoffOberflächen, renoviert werden können.

Keramikfliesen können zwar direkt auf bestehende Sitz- oder Liegeflächen mit einer Kunststoffoberfläche verlegt werden. Hierzu sind aber reaktive Klebstoffe und/oder Klebevermittler erforderlich, da der Untergrund nicht adhäsiv ist. Arbeitsvorschriften beitsvorschriften und gesundheitliche Bedenken schränken daher die direkte Verlegung ein. Die vorhandenen Krümmungen erschweren außerdem das Verlegen von Fliesen.

Die genannte Aufgabe wird durch ein Verfahren gemäß Anspruch 1 bzw. durch einen Renovierungsaufsatz gem. Anspruch 8 für Sitze, Liegen, Wände oder Böden mit einer überholungsbedürftigen, insbesondere ständig benetzten Kunststoffoberfläche, gelöst, der aus wenigstens einem geformten Hartschaum-Sandwichelement besteht, dessen Mittelschicht aus einem Hartschaum gebildet ist und bei dem wenigstens eine Außenschicht vorhanden ist, die aus einer armierten Mörtelschicht besteht, die mit einer weiteren Deckschicht verbindbar ist, wobei die Innenseite des Renovierungsaufsatzes an die Kontur der zu renovierenden Kunststoffoberfläche des Sitzes, der Liege, bzw. der Wand oder des Bodens eines Wasserbeckens angepaßt ist, auflegbar und adhäsiv befestigbar ist. Vorzugsweise ist eine Flächenbündigkeit zwischen Renovierungselement und zu renovierendem Element vorhanden.

Der Renovierungsaufsatz für Sitze oder Liegen besteht vorzugsweise aus mehreren, verbundenen oder zu fügenden Hartschaum-Sandwichelementen, die sich einfach verarbeiten und einbauen lassen.

Die mit der überholungsbedürftigen Kunststoffoberfläche in Kontakt kommende Innenseite des Hartschaum-Sandwichelements ist vorzugsweise ebenfalls mit einer armierten Mörtelschicht versehen.

Hartschaum-Sandwichelemente als Bauelemente sind an sich bekannt. Ein Herstellungsverfahren ist in der DE 199 22 259 A1 beschrieben, auf die hier - als Stand der Technik - vollinhaltlich Bezug genommen wird. Auch sind bereits Rundduschen mit derartigen Elementen hergestellt worden (DE 100 60 870).

Das Hartschaum-Sandwichelement kann auch von vornherein wenigstens teilweise auf seiner Außenschicht mit keramischen Abdeckelementen, insbesondere Mosaikfliesen, belegt sein, so dass auf der Baustelle nur noch Nacharbeiten ausgeführt werden müssen.

Das Hartschaum-Sandwichelement kann auf seiner Außenseite eine mit der Mörtelschicht integrierte oder auf diese aufgebrachte, sitzflächengeeignete Kunststoffschicht oder eine Schicht aus Holzwerkstoff tragen, so dass auf einen zusätzlichen Fliesenbelag auch verzichtet werden kann.

Die Dicke der Sandwichelemente kann zwischen 10 bis 50 mm liegen. Sie wird in Abhängigkeit zur Kunststoffkonstruktion und zum zur Verfügung stehenden Raum gewählt. Ein aus mehreren Hartschaum-Sandwichelementen bestehender Renovierungsaufsatz bietet zum einen den Vorteil, dass die einfach gestalteten Elemente einfach und preiswert zu fertigen sind. Zum anderen ist der aus mehreren Elementen bestehende Renovierungsaufsatz montagefreundlich, da die Elemente handlich sind und gegebenenfalls angepaßt werden können.

Das Hartschaum-Sandwichelement weist vorteilhafterweise entsprechend der zu belegenden Fläche über ihre Gesamtfläche gesehen unterschiedliche Profilstärken auf, damit Konturen ergonomisch neu gestaltet und für den Fliesenbelag angepaßt werden können.

Die Hartschaumplatten können vorteilhafterweise auch mit einem Heizsystem ausgestattet werden, wobei entweder Rohre oder Heizdrähte in die Hartschaumplatten eingearbeitet werden.

Die Erfindung wird im folgenden anhand der Zeichnung beschrieben. Die Figuren der Zeichnung zeigen im einzelnen:
- Fig. 1: ein teilgeschnittenes Kleinschwimmbecken in perspektivischer Darstellung
- Fig. 2: Renovierungsaufsatz auf Sitzen in einem Dampfbad;
- Fig. 3: eine zweite Ausführungsform eines Renovierungsaufsatzes auf einer Liege;
- Fig. 4: eine dritte Ausführungsform eines Renovierungsaufsatzes.

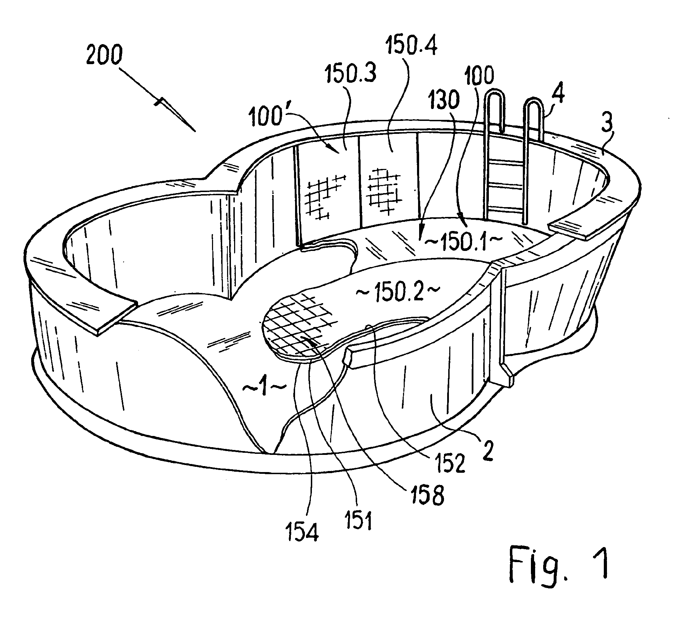

In der Figur 1 ist ein Kleinschwimmbecken 200 dargestellt, das einen lemniskatenfömigen Grundrisse hat. Der Boden 1 und die geschlossene Wand 2 des Kleinschwimmbeckens bestehen aus einem einstückigen, glasfaserverstärkten Polyesterverbund, der mit einem Anstrich auf Basis von Epoxidharz versehen ist. Den oberen Abschluss bildet ein Randsteg 3; über eine Leiter 4 ist das Becken zugänglich. Wasseranschlüsse und -abflüsse sind nicht dargestellt.

Es sei angenommen, dass die dem Wasser zugewandte Kunststoff-Oberfläche 130 renovierungsbedürftig sei. Um eine rasche und zu einem ansehnlichen Becken führende Renovierung durchzuführen, wird bei geleertem Kleinschwimmbecken 200 ein Renovierungsaufsatz 100 auf dem Boden und ein weiterer Renovierungsaufsatz 100' an der Wand des Beckens befestigt.

Der für den Boden bestimmte Renovierungsaufsatz 100 besteht aus vorgefertigten Hartschaum-Sandwichelementen 150.1 und 150.2, die auf dem Boden 1 des Kleinschwimmbecken verlegt werden. Sie bilden eine für den Fliesenbelag geeignete Deckschicht. Die Hartschaum-Sandwichelemente 150.1 und 150.2 besitzen Mittelschichten aus einem Polystyrol-Hartschaum. Die Mittelschichten sind auf ihren Außenseiten mit einer mit Glasfasergewebe alarmierten Mörtelschicht beschichtet. Die Innenseiten der Hartschaum-Sandwichelementen sind an die Kontur der Kunststoffoberfläche 130 des Bodens angepasst, so dass der Renovierungsaufsatz 100 vollflächig auf der Bodenfläche aufliegt. Die Befestigung erfolgt durch Verkleben an einzelnen, lokalisierten Bereichen (»Batzen«), in denen ein Epoxidharz-Klebstoff den Aufsatz mit der Fläche verbindet. Auf der Mörtelschicht sind Fliesen 158 verklebt. Auch eine Verklebung mit lösungsmittelfreien Mehrkomponenten-Klebstoffen ist möglich.

Ähnlich ist die Innenseite der Wand 2 des Kleinschwimmbekkens mit einem zusammengesetzten Renovierungsaufsatz 100' belegt, der sich aus paneelartigen Hartschaum-Sandwichelementen 150.3 und 150.4 zusammensetzt. Der Aufbau entspricht den Sandwichelementen des Bodens bzw. der Stammanmeldung. Die Hartschaum-Sandwichelemente mit ihrer Mörtelschicht können mit einem keramischen Belag versehen sein, jedoch auch mit einem wasserfesten Anstrich beschichtet sein. Je nach anzunehmender Belastung können die Hartschaum-Sandwichelementen über ihre Gesamtfläche gesehen unterschiedliche Profilstärken aufweisen. Die Dicke der Sandwichelemente liegt üblicherweise zwischen 10 und 50 mm.

Es ist besonders vorteilhaft, dass die Einzelelemente bzw. die zu einem zu fügenden Einsatz vorgeformten Elemente bereits mit einer armierten Mörtelschicht und keramischen Abdeckelementen vor dem Einbau beschichtet sein können, so dass eine maßgerechte und rasche Renovierung von derartigen Becken möglich ist. Ein weiterer Vorteil ist, dass eine wesentlich verbesserte Wärmeisolierung des Wassers gegenüber der Beckenfläche erzielt wird.

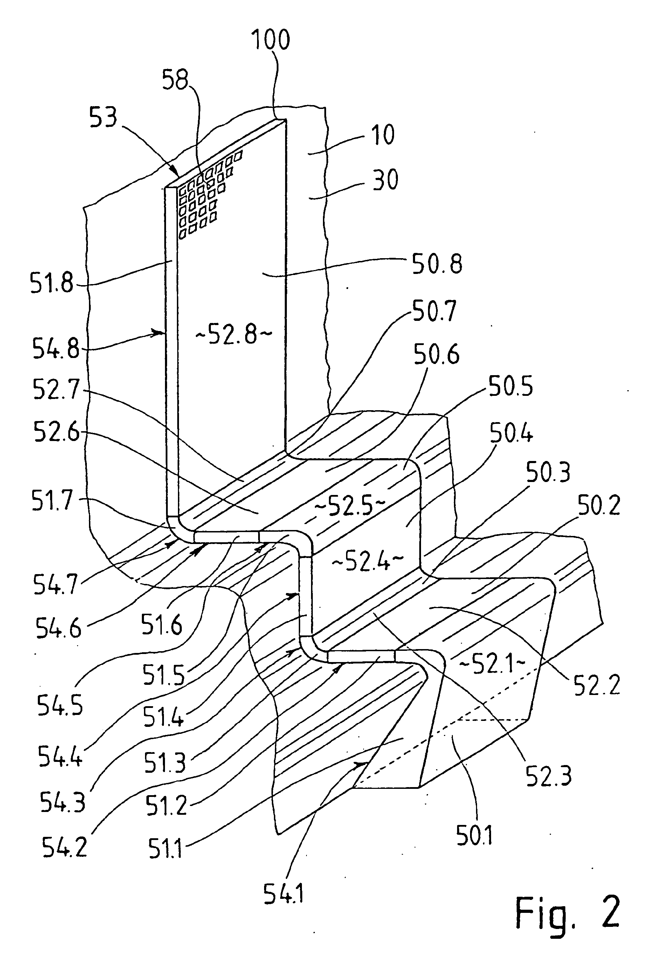

In Fig.2 ist ein Sitz 10 eines Dampfbades mit einem montierten Renovierungsaufsatz 100 dargestellt. Der Sitz 10 hatte ursprünglich eine stark überholungsbedürftige Kunststoffoberfläche 30. Die Oberfläche war stumpf, übersät mit Kratzern und Rissen; die Farbe war ungleichmäßig verblichen.

Der Renovierungsaufsatz 100 dient der zügigen Aufbringung einer für Fliesenbeläge geeigneten Deckschicht 53 auf die-Kunststoffoberfläche 30 und der Gestaltung einer neuen Form für die aufgebrachte Deckschicht 53.

Der die Sitzfläche abdeckende Renovierungsaufsatz 100 besteht aus mehreren Hartschaum-Sandwichelementen 50.1...50.8, deren Mittelschichten 51.1...51.8 aus einem Polystyrol-Hartschaum gebildet sind. Die Mittelschichten 51.1...51.8 sind auf ihren Außenseiten mit einer mit Glasfasergewebe armierten Mörtelschicht 52.1...52.8 beschichtet. Die Innenseiten 54.1...54.8 des Renovierungsaufsatzes sind an die Kontur der Kunststoffoberfläche 30 des jeweiligen Einbauortes angepasst, so dass der Renovierungsaufsatz 100 vollflächig auf der Kunststofffläche 30 aufliegt. Die Befestigung erfolgt durch Verkleben an einzelnen, lokalisierten Bereichen ("Batzen"), in denen ein Epoxidharz-Klebstoff den Aufsatz mit der Fläche verbindet.

Auf der Mörtelschicht 55.1...55.8 sind Mosaikfliesen 58 verklebt.

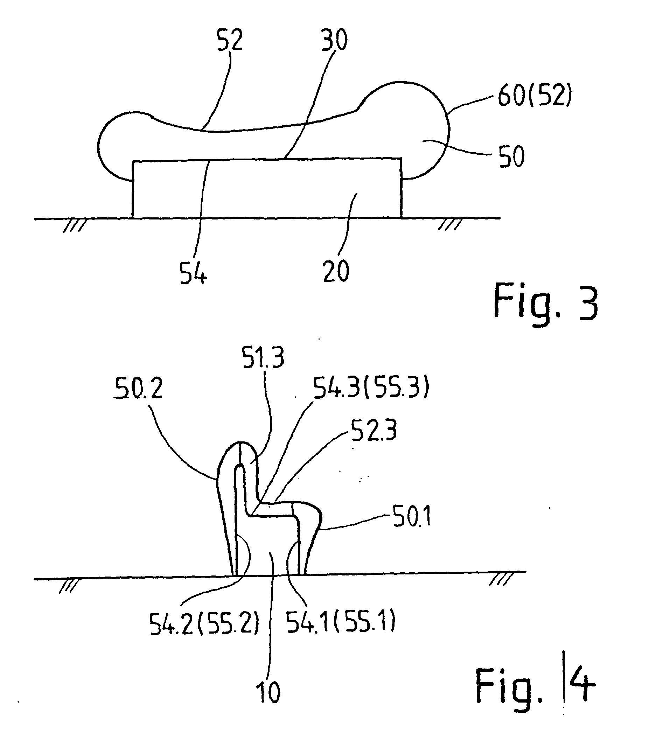

Fig. 3 zeigt eine zweite Ausführungsform des Renovierungsaufsatzes 100, bei dem auf der außen liegenden armierten Mörtelschicht 52 eine sitzflächengeeignete Kunststoffschicht 60 aufgebracht oder in der Mörtelschicht 55 integriert ist. Der Renovierungsaufsatz 100 besteht aus einem Hartschaum-Sandwichelement 50, das auf einer Liege 20 montiert ist.

Fig. 4 zeigt eine Variante der ersten Ausführungsform des Renovierungsaufsatzes 100 als dritte Ausführungsform. Bei diesem Renovierungsaufsatz ist die Mittelschicht 51 mit einer Innenseite 54 versehen, die mit einer Mörtelschicht 55 ausgestattet ist. Die Verbindung zwischen Innenseite und zu renovierenden Fläche geschieht durch lösungsmittelfreie Mehrkomponenten-Klebstoffe.

## Patentansprüche

1. Verfahren zur Renovierung von Sitzen (10), Liegen (20), Wänden oder Böden, die eine überholungsbedürftige Kunststoffoberfläche (30, 130) aufweisen und mit einer Beschichtung versehen werden, **dadurch gekennzeichnet, dass** auf die Kunststoffoberfläche wenigstens ein vorgeformtes Hartschaum-Sandwichelement (50, 150), das mit.seiner Innenseite (54, 154) an die Kontur der zu renovierenden Kunststoffoberfläche (30, 130) angepasst ist, auf diese aufgelegt und an dieser adhäsiv befestigt wird, wobei die Mittelschicht (51, 151) des vorgeformten Hartschaum-Sandwichelements (50, 150) aus einem Hartschaum gebildet ist und wenigstens eine Außenschicht (52, 152) besitzt, die aus einer armierten Mörtelschicht besteht, die wiederum mit einer weiteren Deckschicht (53, 153) verbunden wird.

2. Verfahren nach Anspruch 1, **dadurch gekennzeichnet, dass** Wand und/oder Boden Teil eines Wasserbeckens, insbesondere Bade- oder Schwimmbeckens ist.

3. Verfahren nach Anspruch 2, **dadurch gekennzeichnet, dass** der für ein Wasserbecken bestimmte Renovierungsaufsatz (100, 100') aus mehreren Hartschaum-Sandwichelementen (150.1 ... 150.4) verbunden oder verfügt ist

4. Verfahren nach Anspruch 1, **dadurch gekennzeichnet, dass** der für einen Sitz (10) oder eine Liege (20) bestimmte Renovierungsaufsatz (100) aus mehreren Hartschaum-Sandwichelementen (50.1 ... 50.8) verbunden oder verfügt ist.

5. Verfahren nach Anspruch 1 bis 4, **dadurch gekennzeichnet, dass** auch die mit der überholungsbedürftigen Kunststoffoberfläche (30, 130) in Kontakt kommende Innenseite (54, 154) des Hartschaum-Sandwichelements (50, 150) mit einer armierten Mörtelschicht 55, 155) versehen wird.

6. Verfahren nach einem der vorhergehenden Ansprüche, **dadurch gekennzeichnet, dass** das Hartschaum-Sandwichelement (50, 150) wenigstens teilweise auf seiner Außenschicht (52) mit keramischen Abdeckelementen (53, 153), insbesondere Mosaikfliesen, belegt wird.

7. Verfahren nach einem der vorhergehenden Ansprüche, **dadurch gekennzeichnet, dass** die Hartschaum-Sandwichelemente (50.1 ... 50.8) über ihre Gesamtfläche gesehen unterschiedliche Profilstärken aufweisen.

8. Renovierungsaufsatz zur Durchführung des Verfahrens nach einem der Ansprüche 1 bis 7, **dadurch gekennzeichnet, dass** er als Hartschaum-Sandwichelement (50, 150), das mit seiner Innenseite an die Kontur der zu renovierenden Kunststoffoberfläche (30, 130) angepasst ist, als Einzelelement oder als zu fügender Teilesatz vorgeformt und mit einer armierten Mörtelschicht auf seiner Außenseite beschichtet ist.

9. Renovierungsaufsatz nach Anspruch 8, **dadurch gekennzeichnet, dass** das Hartschaum-Sandwichelement (50) auf seiner Außenseite eine mit der Mörtelschicht (52) integrierte oder auf diese aufgebrachte, sitzflächengeeignete Kunststoffschicht (60) oder eine Schicht aus Holzwerkstoffen trägt.

10. Renovierungsaufsatz nach Anspruch 8 oder 9, **dadurch gekennzeichnet, dass** die Dicke der Sandwichelemente (50.1 ... 50.8) (150.1.... 150.4) zwischen 10 bis 50 mm liegt.

## Claims

1. Method of refurbishing seats (10), beds (20), walls or floors which have a synthetic material surface (30, 130) in need of renovation and are provided with a coating, **characterised in that** on the synthetic material surface at least one pre-formed rigid foam sandwich element (50, 150), which is adapted on its inside (54, 154) to the contour of the synthetic material surface (30, 130) to be refurbished, is placed thereon and adhesively attached thereto, wherein the middle layer (51, 151) of the preformed rigid foam sandwich element (50, 150) is formed from a rigid foam and has at least one outer layer (52, 152) which consists of a reinforced mortar layer which is in turn connected to a further covering layer (53, 153).

2. Method as claimed in claim 1, **characterised in that** the wall and/or floor is part of a water pool, in particular a bathing or swimming pool.

3. Method as claimed in claim 2, **characterised in that** the refurbishing attachment (100, 100') intended for a water pool is connected or joined together from a plurality of rigid foam sandwich elements (150.1 ... 150.4).

4. Method as claimed in claim 1, **characterised in that** the refurbishing attachment (100) intended for a seat (10) or a bed (20) is connected or joined together from a plurality of rigid foam sandwich elements (50.1 ... 50.8).

5. Method as claimed in claim 1 to 4, **characterised in that** the inside (54, 154) of the rigid foam sandwich element (50, 150) coming into contact with the synthetic material surface (30, 130) in need of renovation is also provided with a reinforced mortar layer (55, 155).

6. Method as claimed in any one of the preceding claims, **characterised in that** the rigid foam sandwich element (50, 150) is at least partially covered on its outer layer (52) with ceramic covering elements (53, 153), in particular mosaic tiles.

7. Method as claimed in any one of the preceding claims, **characterised in that** the rigid foam sandwich elements (50.1 ... 50.8) have different profile thicknesses when seen over their whole surface.

8. Refurbishing attachment for carrying out the method as claimed in any one of claims 1 to 7, **characterised in that** it is preformed as a rigid foam sandwich element (50, 150) which is adapted on its inside to the contour of the synthetic material surface (30, 130) to be refurbished, is preformed as an individual element or as a set of parts to be joined together, and is coated on its outside with a reinforced mortar layer.

9. Refurbishing attachment as claimed in claim 8, **characterised in that** on its outside the rigid foam sandwich element (50) supports a layer made from wooden materials or a synthetic material layer (60), which is suitable for a seating surface and is integrated with the mortar layer (52) or is applied thereto.

10. Refurbishing attachment as claimed in claim 8 or 9, **characterised in that** the thickness of the sandwich elements (50.1 ... 50.8) (150.1 .... 150.4) is between 10 to 50mm.

## Revendications

1. Procédé de rénovation de sièges (10), fauteuils de relaxation (20), parois ou sols, qui présentent une surface (30, 130) en matière plastique requérant une remise en état et sont pourvus d'un revêtement, **caractérisé en ce qu'**au moins un élément de sandwich préformé (50, 150) en mousse rigide, adapté par son côté interne (54, 154) au contour de la surface de matière plastique (30, 130) à rénover, est appliqué sur la surface de matière plastique et y est fixé de manière adhésive, d'une manière telle que la couche intermédiaire (51, 151) de l'élément de sandwich préformé (50, 150) en mousse rigide consiste en une mousse rigide et possède au moins une couche externe (52, 152) qui se compose d'une couche de mortier armée, qui est elle-même attachée à une autre couche de recouvrement (53, 153).

2. Procédé selon la revendication 1, **caractérisé en ce que** la paroi et/ou le fond fait partie d'un bassin, en particulier un bassin de baignade ou de natation.

3. Procédé selon la revendication 2, **caractérisé en ce que** la garniture de rénovation (100, 100') destinée à un bassin est composée de plusieurs éléments de sandwich (150.1 ... 150.4) en mousse rigide, ou est assemblée à partir de plusieurs de ces éléments.

4. Procédé selon la revendication 1, **caractérisé en ce que** la garniture de rénovation (100) destinée à un siège ou à un fauteuil de relaxation (20) est composée de plusieurs éléments de sandwich (50.1 ... 50.8) en mousse rigide, ou est assemblée à partir de plusieurs de ces éléments.

5. Procédé selon l'une quelconque des revendications précédentes, **caractérisé en ce que** le côté interne (54, 154) de l'élément de sandwich (50, 150) en mousse rigide, qui vient en contact avec la surface de matière plastique (30, 130) requérant une remise en état, est lui aussi pourvu d'une couche de mortier armée (55, 155).

6. Procédé selon l'une quelconque des revendications précédentes, **caractérisé en ce que** l'élément de sandwich (50, 150) en mousse rigide, est revêtu, au moins partiellement sur sa couche externe (52), d'éléments de recouvrement (53, 153) en céramique.

7. Procédé selon l'une quelconque des revendications précédentes, **caractérisé en ce que** les éléments de sandwich (50.1 ... 50.8) en mousse rigide présentent diverses épaisseurs de profil en différents points de leur surface globale.

8. Garniture de rénovation pour mettre en oeuvre le procédé selon l'une quelconque des revendications précédentes, **caractérisée en ce qu'**elle est préformée en un élément individuel ou en un ensemble d'éléments à assembler, en formant un élément de sandwich (50, 150) en mousse rigide qui est adapté par son côté interne au contour de la surface de matière plastique (30, 130) à rénover, et **en ce qu'**elle est revêtue d'une couche de mortier armée sur son côté externe.

9. Garniture de rénovation selon la revendication 8, **caractérisée en ce que** l'élément de sandwich (50) en mousse rigide porte, sur son côté externe, une couche de matière plastique (60) apte à être utilisée comme surface de siège qui est intégrée avec la couche de mortier (52) ou appliquée sur celle-ci, ou une couche de matières ligneuses.

10. Garniture de rénovation selon la revendication 8 ou 9, **caractérisée en ce que** l'épaisseur de l'élément de sandwich (50.1 ... 50.8) (150.1 . . . 150.4) est comprise entre 10 et 50 mm.
